# EUROPÄISCHE PATENTSCHRIFT

(11) **EP 3 454 970 B1**
(45) Veröffentlichungstag und Bekanntmachung des Hinweises auf die Patenterteilung: **04.08.2021**
(21) Anmeldenummer: 17721049.9
(22) Anmeldetag: 03.05.2017
(51) Int. Cl.: B01D 46/52, B01D 27/06, B01D 29/21, B01D 29/54

(54) **PLISSIERTES FILTERELEMENT MIT ZUSATZSTRUKTUR**
PLEATED FILTER WITH STRUCTURING ELEMENT
FILTRE PLISSÉ AVEC ELEMENT DE STRUCTURATION

(30) Priorität: 10.05.2016 DE 102016005762
(43) Veröffentlichungstag der Anmeldung: 20.03.2019
(73) Patentinhaber: Hydac Filter Systems GmbH, 66280 Sulzbach/Saar (DE)
(72) Erfinder: SCHNEIDER, Dominic, 66640 Namborn (DE); SCHUBERT, Nils, 99092 Erfurt (DE); SCHUNK, Andreas, 66914 Waldmohr (DE)
(74) Vertreter: Bartels, Martin Erich Arthur
(86) Internationale Anmeldenummer: PCT/EP2017/000552
(87) Internationale Veröffentlichungsnummer: WO 2017/194185

(56) Entgegenhaltungen:
- WO-A1-2010/059089
- DE-A1- 2 034 670
- DE-A1-102004 061 078
- DE-A1-102011 119 408
- US-A- 3 870 495

## Beschreibung

Die Erfindung betrifft ein Filterelement mit den Merkmalen im Oberbegriff des Anspruchs 1.

Ein Filterelement dieser Gattung ist aus dem Dokument DE 10 2004 061 078 A1 bekannt, das ein Filterelement offenbart, mit einer plissierten Filtermatte, deren axialen Abschlussenden mit jeweils einer Endkappe verbunden sind und die eine Hauptstrukturlage mit Filtrationseigenschaften sowie eine erste und eine zweite Zusatzstrukturlage aufweist, deren Flächenausdehnung jeweils kleiner ist als die Flächenausdehnung der Hauptstrukturlage, wobei die axialen Enden der einen Zusatzstrukturlage sich an der Filtermatte in einem axialen Abstand von den axialen Enden der jeweils anderen Zusatzstrukturlage befinden.

Die bei dieser Lösung vorgesehenen Zusatzstrukturlagen, die mit unterschiedlicher Flächenausdehnung von einem Ende der Hauptstrukturlage ausgehen, an dem sie zusammen mit der Hauptstrukturlage in eine Endkappe eingebunden sind, bezwecken eine Optimierung der Filtereigenschaften des Filterelements. Hierfür kann bei der bekannten Lösung die Hauptstrukturlage als Hauptfilterlage von der Fluiddurchlässigkeit her derart konzipiert sein, dass hohe Fluidmengen bei akzeptabler Schmutzaufnahmekapazität durchgelassen werden, während Zusatzstrukturlagen als Vorfilter eine höhere Filterfeinheit besitzen. Dadurch ist das Betriebsverhalten des Filterelements dahingehend verbessert, dass bei einem sogenannten Kaltstart der angeschlossenen hydraulischen Anlage, wenn das zu filtrierende Fluid noch kalt und entsprechend zähflüssig (hochviskos) ist, der Hauptfilter wenig Durchflusswiderstand bildet und der Vorfilter mit Teilen des Hauptfilters zusammen die gewünschte Schmutzaufnahmekapazität sicherstellt.

Die DE 2 034 670 A1 offenbart ein Filterelement, mit einer plissierten Filtermatte, die eine Hauptstrukturlage mit Filtrationseigenschaften sowie eine erste und eine zweite Zusatzstrukturlage aufweist, deren Flächenausdehnung jeweils kleiner ist als die Flächenausdehnung der Hauptstrukturlage, wobei die axialen Enden der einen Zusatzstrukturlage sich an der Filtermatte in einem axialen Abstand von den axialen Enden der jeweils anderen Zusatzstrukturlage befinden.

Ausgehend von diesem Stand der Technik stellt sich die Erfindung die Aufgabe, ein Filterelement der eingangs genannten Gattung zur Verfügung zu stellen, das bei Beibehalten der genannten Vorteile des Standes der Technik mittels Zusatzstrukturlagen eine Faltenstabilisierung der Filtermatte gegen im Filtrationsbetrieb wirkende Belastungen gewährleistet.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass an jeder der beiden Endkappen je eine Zusatzstrukturlage mit einem Ende zusammen mit dem zugeordneten Ende der Hauptstrukturlage in die betreffende Endkappe eingeschweißt ist, dass die Endkappen aus einem Kunststoffmaterial bestehen, das sich für einen Schweißvorgang eignet, bei dem durch Erwärmen der Endkappe Bestandteile der Fügepartner anschmelzen, und dass die Zusatzstrukturlagen aus einem Werkstoff in Form eines Prepreg-Materials bestehen, das beim Faltprozess aushärtet oder anschließend durch Wärmeeintrag ausgehärtet wird.

Dadurch ist nicht nur durch eine Materialverdichtung eine erhöhte Stabilität an beiden Endkappen erreicht, während im von Zusatzstrukturlagen freien Bereich zwischen den Endkappen eine demgegenüber höhere Flexibilität mit erhöhtem Freiraum zwischen den Falten der Filtermatte ermöglicht ist. Darüber hinaus wird durch die Materialverdichtung eine besonders sichere Einbindung der Filtermatte in die Endkappen sichergestellt, weil bei der Herstellung des Filterelements beim Schweißvorgang an der erwärmten Endkappe mehr Schmelzematerial zur Verfügung steht, das die Filtermatte somit sicher umschließt. Die Gefahr der Bildung eines Bypasses am Filterelement wird dadurch stark reduziert. Da die Materialdichte, die für eine sichere Einbindung der Filtermatte in die Endkappe benötigt wird, nicht über die gesamte Filterelementlänge beibehalten ist, ist bei gleicher Faltenstabilität das Gesamtvolumen der Filtermatte reduziert, was wiederum mehr Raum zwischen den Falten für die Aufnahme von Schmutzpartikeln lässt. Auch ist die dadurch flexibel gehaltene Filtermatte fähig, durch Aufblähen bei bereits geringem Differenzdruck zusätzliche freie Anströmfläche zur Verfügung zu stellen.

Ferner ist vorgesehen, dass die axialen Enden der einen Zusatzstrukturlage sich an der Filtermatte in einem axialen Abstand von den axialen Enden der jeweils anderen Zusatzstrukturlage befinden. Dadurch, dass bei der Erfindung Strukturlagen an voneinander vollständig gesonderten Positionen der axialen Länge der Filtermatte platziert sind, ist eine Faltenstabilisierung an ausgewählten Bereichen durch bereichsweise zugeordnete Zusatzstrukturlagen erreichbar.

Bei vorteilhaften Ausführungsbeispielen kann die Filtermatte eine dritte stabilisierende Zusatzstrukturlage aufweisen, deren Enden sich in einem axialen Abstand sowohl von der ersten als auch von der zweiten mit einer Endkappe verbundenen Strukturlage befinden. Durch eine derart angeordnete dritte Zusatzstrukturlage steht bei Filterelementen größerer Baulänge durch die zum Beispiel mittig angebrachte dritte Zusatzstrukturlage ein Abstandshalter zur Verfügung, der über die gesamte Länge des Filterelements die Faltengeometrie stabilisiert.

Die Zusatzstrukturlagen können ohne Filtrationseigenschaften als stabilisierendes Füllmaterial vorgesehen sein, können jedoch auch Filtrationseigenschaften aufweisen, die sich vorzugsweise gegenüber der Filtrationseigenschaft der das Hauptfilter bildenden Hauptstrukturlage unterscheiden und so gewählt sind, dass optimale Filtrationseigenschaften resultieren.

Vorteilhafterweise sind die Zusatzstrukturlagen plissiert und vorzugsweise mit der gleichen Art und Anzahl von Falten zusammen mit der Hauptstrukturlage in die Filterlagen eingefaltet, wobei sowohl Hauptstrukturlage als auch Zusatzstrukturlagen mehrlagig aufgebaut sein können.

Die Zusatzstrukturlagen können außenseitig oder als in der Filtermatte innenliegende Lagen eingefaltet sein. Weiterhin können Zusatzstrukturlagen anström- oder abströmseitig in die Filtermatte eingefaltet sein, wobei die axiale Länge der Zusatzstrukturlagen unterschiedlich ausgelegt sein kann.

Gemäß dem Patentanspruch 10 ist Gegenstand der Erfindung auch ein Verfahren zum Herstellen eines Filterelements gemäß einem der Patentansprüche 1 bis 9. Wie im kennzeichnenden Teil von Anspruch 10 angegeben, wird in einem Verfahrensschritt eine aus mehreren Lagen bestehende Filtermatte aus einer vorzugsweise mehrlagigen, Filtrationseigenschaften aufweisenden Hauptstrukturlage zusammen mit mindestens einer weiteren, aus stabilisierendem Material bestehenden Zusatzstrukturlage gefaltet. Des Weiteren wird die so gebildete Filtermatte zu einem entlang einer Längsnaht umfänglich geschlossenen Hohlkörper geformt. Diese Längsnaht kann durch eine Schweißnaht oder eine Klebeverbindung gebildet sein. Sodann werden die aus Hauptstrukturlage und zumindest einer Zusatzstrukturlage bestehenden Enden des Hohlkörpers mit Endkappen durch Schweißen verbunden. Dabei kann der Werkstoff der Zusatzstrukturlagen zusammen mit Bestandteilen der Hauptstrukturlage ein Volumen an Schmelze beim die Verbindung mit der Endkappe herstellenden Schweißvorgang zur Verfügung stellen.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispiels des erfindungsgemäßen Filterelements;
- Fig. 2: eine gegenüber Fig. 1 vergrößert gezeichnete perspektivische Schrägansicht eines im gestreckten Zustand gezeigten Längenabschnitts der Filtermatte des Ausführungsbeispiels des Filterelements;
- Fig. 3: eine perspektivische Schrägansicht eines Endabschnitts der zum Hohlkörper geformten Filtermatte des Ausführungsbeispiels vor dem Einsetzen in eine Endkappe;
- Fig. 4: eine der Fig. 3 entsprechende Darstellung der in die Endkappe eingesetzten Filtermatte; und
- Fig. 5: eine schematisch vereinfacht gezeichnete Schrägansicht eines zweiten Ausführungsbeispiels des erfindungsgemäßen Filterelements.

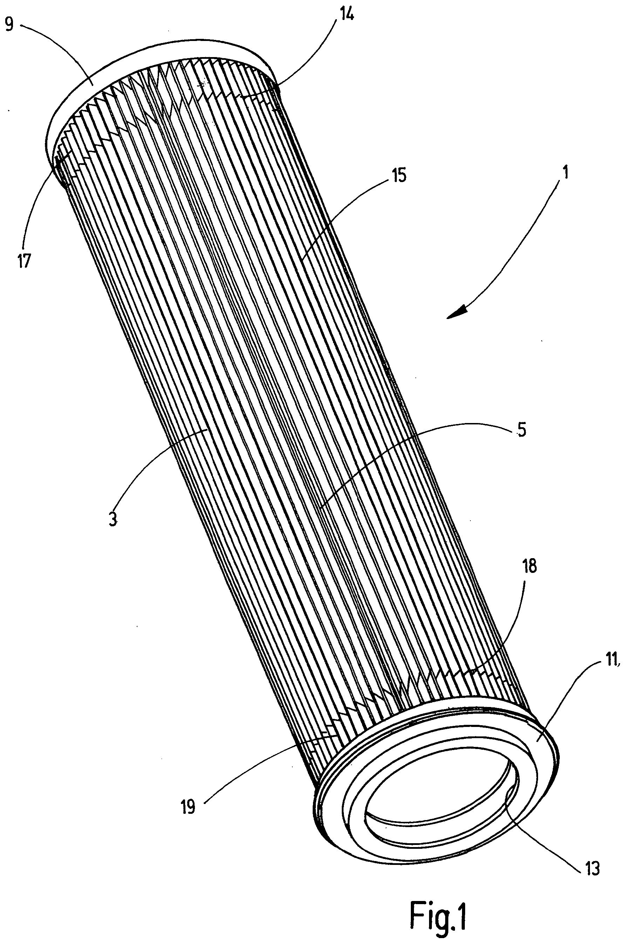

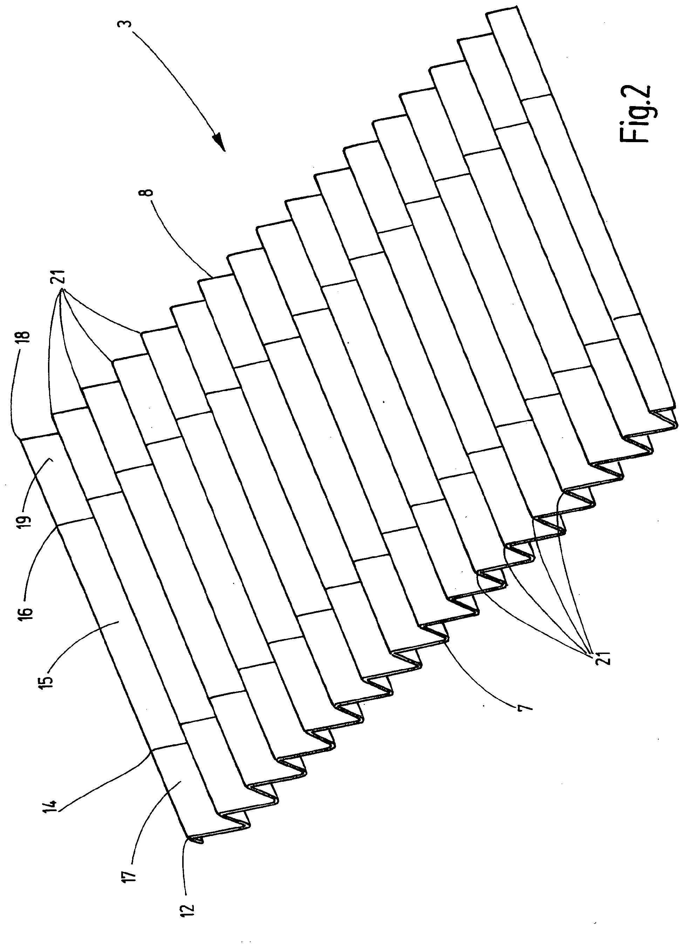

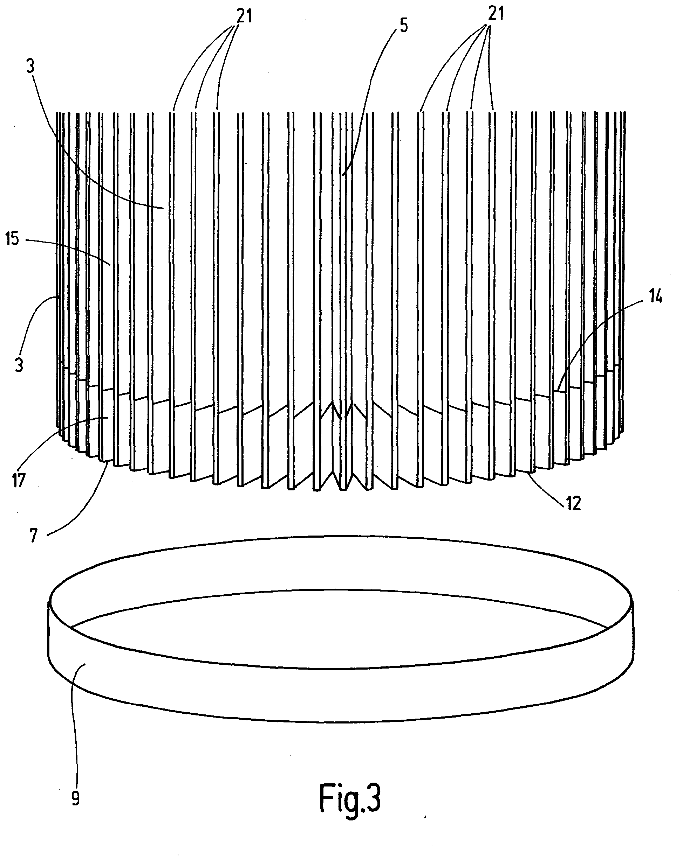

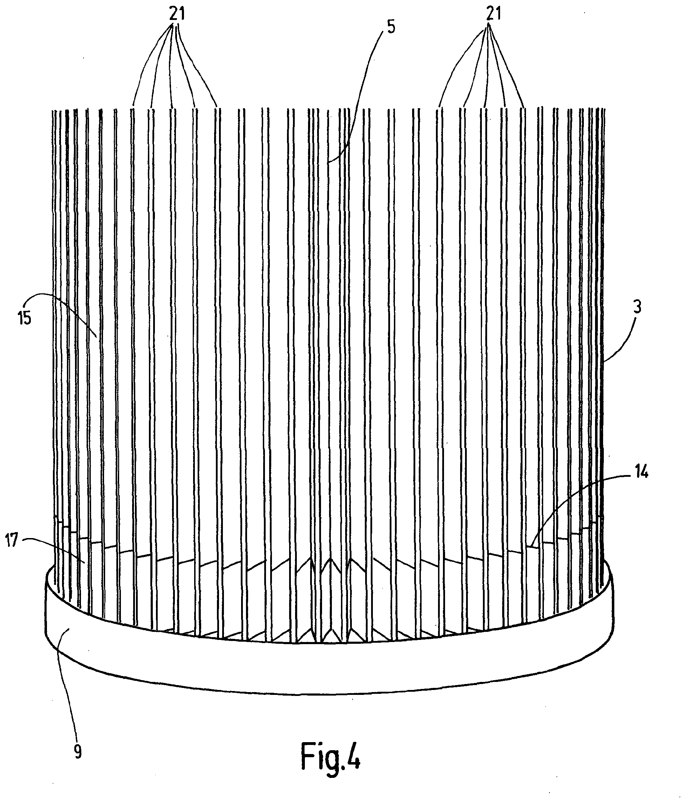

Die Fig. 1 zeigt ein als Ganzes mit 1 bezeichnetes Filterelement gemäß einem ersten Ausführungsbeispiel der Erfindung. In der bei kreiszylindrischen Filterelementen üblichen Weise ist das Filtermedium aus einer plissierten Filtermatte 3 gebildet, die zu einem Hohlkörper geformt ist, der umfangsseitig durch eine Längsnaht 5 geschlossen ist, die durch eine Schweißnaht oder eine Klebeverbindung gebildet ist. Die Filtermatte 3, von der in Fig. 2 ein Längenabschnitt in gestrecktem Zustand gezeigt ist, ist an beiden axialen Abschlussenden 7 und 8, von denen in Fig. 3 nur eines sichtbar und mit 7 bezeichnet ist, in jeweils eine Endkappe 9 und 11 eingeschweißt, die in der bei derartigen Filterelementen üblichen Weise eine Einfassung für den Endrand der Filtermatte 3 bilden. Die in Fig. 1 oben liegende Endkappe 9, die auch in den Fig. 3 und 4 gezeigt ist, ist als geschlossene Kappe ausgebildet, während die unten liegende Endkappe 11 einen zentralen Durchgang 13 zum inneren, von der Filtermatte 3 umgebenen Filterhohlraum aufweist. Bei Anströmung der Filtermatte 3 im Filtrationsbetrieb von außen nach innen kann der innere Filterhohlraum ein in Fig. 1 nicht sichtbares fluiddurchlässiges Stützrohr aufweisen, an dem die Innenseite der Filtermatte 3 anliegt. Die Endkappen 9 und 11 bestehen aus einem Kunststoffmaterial, das sich für einen Schweißvorgang eignet, bei dem durch Erwärmen der Endkappe 9, 11 Bestandteile der Fügepartner anschmelzen.

Die Fig. 2 verdeutlicht den Aufbau der Filtermatte 3. Diese weist von axialem Abschlussende 7 zu axialem Abschlussende 8 durchgehend eine Hauptstrukturlage 15 auf, sowie eine erste Zusatzstrukturlage 17 und eine zweite Zusatzstrukturlage 19, die jeweils kürzer sind als die Hauptstrukturlage 15. Diese Zusatzstrukturlagen 17 und 19 sind beim für die Herstellung der Filtermatte 3 erfolgenden Faltvorgang derart mit eingefaltet, dass sie von je einem Abschlussende 7 oder 8 ausgehen. Genauer gesagt, beginnt die Zusatzstrukturlage 17 mit ihrem Ende 12 am Abschlussende 7 der Filtermatte 3, und die Zusatzstrukturlage 19 beginnt mit ihrem Ende 18 am Abschlussende 8 der Filtermatte 3, wobei die Länge jeder Zusatzstrukturlage 17, 19 einem Bruchteil der axialen Länge der Hauptstrukturlage 15 entspricht. Bei der praktischen, in Fig. 1 gezeigten Ausführung beträgt die axiale Länge jeder Zusatzstrukturlage 17, 19 etwa 1/15 der Länge der Hauptstrukturlage 15. Die Hauptstrukturlage 15 ist in der bei derartigen Filtermaterialien üblichen Weise mehrlagig, mit einer ersten Lage eines Stützgewebes, einer zweiten Lage als Schutzvlies, einer dritten Lage als Hauptvlies, wobei weitere Lagen als Schutzvlies und Stützgewebe vorgesehen sein können und die genannten Stützgewebe, bei metallfreiem Aufbau der Matte aus einem Kunststoffgitter oder einem Kunststoffgewebe bestehen können. Die Zusatzstrukturlagen 17, 19 können aus einem fluidundurchlässigen Kunststoffmaterial bestehen, das einen stabilisierenden Füllstoff zwischen Falten 21 bildet, und bestehen aus einem für einen Schweißvorgang geeigneten Werkstoff. Jedoch können die Zusatzstrukturlagen 17, 19, ebenso wie Bestandteile der Hauptstrukturlage 15, aus einem Kunststoffmaterial mit Filtrationseigenschaften bestehen, das für den Schweißvorgang Schmelzematerial liefert.

Die Zusatzstrukturlagen 17, 19 können bei der Herstellung der Filtermatte 3 derart mit eingefaltet sein, dass die Zusatzstrukturlagen 17, 19, wie in Fig. 2 gezeigt, an der dort sichtbaren Außenseite der Filtermatte 3 anliegen, sodass in Fig. 2 die einander zugewandten Enden 14 und 16 der Zusatzstrukturlagen 17 und 19 sichtbar sind. Die Zusatzstrukturlagen 17, 19 können ebenso innenliegend zwischen Einzellagen der Hauptstrukturlage 15 oder an der in Fig. 2 nicht sichtbaren Innenseite oder an der Rückseite eingefaltet sein. Die Zusatzstrukturlagen 17, 19 können in vorteilhafter Weise aus einem Werkstoff bestehen, der beim Faltprozess aushärtet oder anschließend durch Wärmeeintrag ausgehärtet wird. Beispielsweise kann als Werkstoff ein Prepreg-Material vorgesehen sein, vorzugsweise aus einem Grundmaterial aus Karbon- oder Glasfaser, wobei die zugehörige Menge an Harz derart abgestimmt ist, dass das Material der Zusatzstrukturlagen 17, 19 beim Faltprozess aushärtet oder in einem weiteren Schritt mittels Wärmeeintrag ausgehärtet wird. Durch die an den Endkappen 9, 11 durch die Zusatzstrukturlagen 17, 19 gebildete Materialverdichtung ist eine besonders sichere Einbindung der Filtermatte 3 in die Endkappen 9, 11 sichergestellt, da bei dem durch Erwärmen der Endkappen 9, 11 erfolgenden Schweißprozess mehr Schmelzematerial zur Verfügung steht und damit die Filtermatte 3 sicher umschließt. Die nur bereichsweise stattfindende Materialverdichtung führt zu keiner wesentlichen Erhöhung der Gesamt-Materialdichte der Filtermatte 3, so dass zwischen den Falten 21 Raum für die Aufnahme von Schmutzpartikeln freibleibt. Auch bleibt die Filtermatte 3 flexibel. Die höhere Flexibilität in Bereichen ohne Zusatzstrukturlage 17, 19 kommt der Filtermatte 3 beispielsweise bei rückwirkenden Druckstößen im Betrieb zugute, weil sich die flexible Filtermatte 3 aufblähen und dadurch mehr freie Anströmfläche zur Verfügung stellen kann.

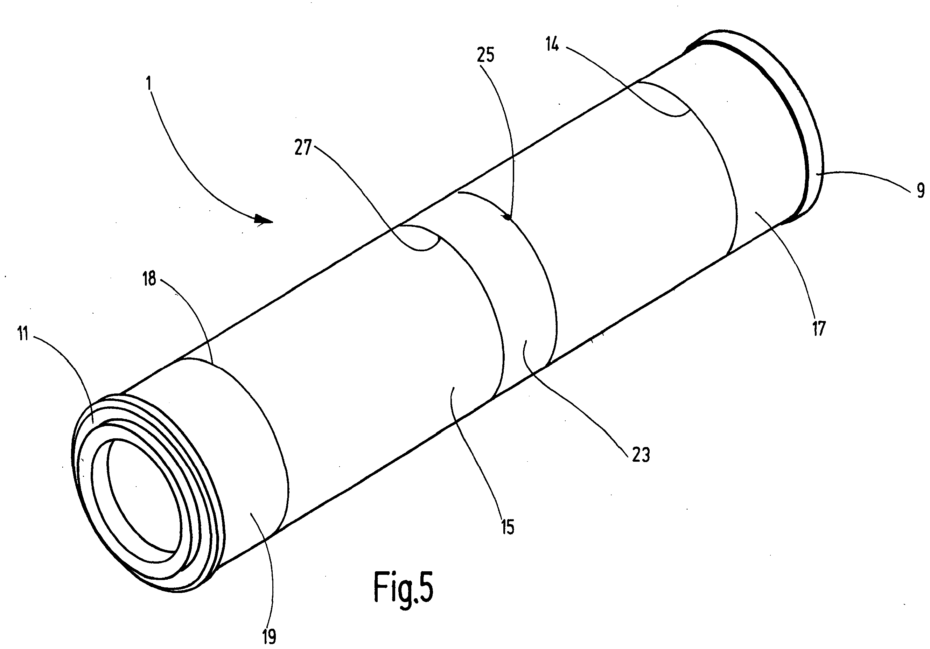

Die Fig. 5 zeigt ein weiteres Ausführungsbeispiel des erfindungsgemäßen Filterelements 1. Hierbei handelt es sich um eine Ausführungsform mit vergleichsweise großer Baulänge. Bei diesem Beispiel ist, zusätzlich zu den von den Endkappen 9 und 11 ausgehenden Zusatzstrukturlagen 17 und 19 eine dritte Zusatzstrukturlage 23 vorgesehen. Diese ist, im Abstand von den Zusatzstrukturlagen 17 und 19, beim gezeigten Beispiel mittig in die Bahn der Filtermatte 3 derart eingefaltet, dass sie, wie die Zusatzstrukturlagen 17, 19, an der Außenseite der Hauptstrukturlage 15 liegt und dass die Enden 25 und 27 der Zusatzstrukturlage 23 von den zugewandten Enden 14 und 16 der Zusatzstrukturlage 17 bzw. 19 jeweils einen Abstand besitzen. Diese dritte Zusatzstrukturlage 23 besteht aus einem Füllmaterial, das wie das Material der anderen Zusatzstrukturlagen 17, 19 beim Faltprozess aushärtet oder aushärtbar ist, und dient als stabilisierender Abstandhalter, der die Zwischenräume der Falten 21 über die Elementlänge offen hält. Wie die beiden anderen Zusatzstrukturlagen 17 und 19 kann auch die dritte Zusatzstrukturlage 23 Filtrationseigenschaft besitzen oder aus einem fluidundurchlässigen Füllstoff gebildet sein.

## Patentansprüche

1. Filterelement, mit einer plissierten Filtermatte (3), deren axialen Abschlussenden (7, 8) mit jeweils einer Endkappe (9, 11) verbunden sind und die eine Hauptstrukturlage (15) mit Filtrationseigenschaften sowie eine erste und eine zweite Zusatzstrukturlage (17, 19) aufweist, deren Flächenausdehnung jeweils kleiner ist als die Flächenausdehnung der Hauptstrukturlage (15), wobei die axialen Enden (12, 14) der einen Zusatzstrukturlage (17) sich an der Filtermatte (3) in einem axialen Abstand von den axialen Enden (16, 18) der jeweils anderen Zusatzstrukturlage (19) befinden, **dadurch gekennzeichnet, dass** an jeder der beiden Endkappen (9, 11) je eine Zusatzstrukturlage (17, 19) mit einem Ende (12, 18) zusammen mit dem zugeordneten Ende (7, 8) der Hauptstrukturlage (15) in die betreffende Endkappe (9, 11) eingeschweißt ist, dass die Endkappen (9, 11) aus einem Kunststoffmaterial bestehen, das sich für einen Schweißvorgang eignet, bei dem durch Erwärmen der Endkappe (9, 11) Bestandteile der Fügepartner anschmelzen, und dass die Zusatzstrukturlagen (17, 19) aus einem Werkstoff in Form eines Prepreg-Materials bestehen, das beim Faltprozess aushärtet oder anschließend durch Wärmeeintrag ausgehärtet wird.

2. Filterelement nach Anspruch 1, **dadurch gekennzeichnet, dass** die Filtermatte (3) eine dritte stabilisierende Zusatzstrukturlage (23) aufweist, deren Enden (25, 27) sich in einem axialen Abstand sowohl von der ersten (17) als auch von der zweiten mit einer Endkappe (9, 11) verbundenen Strukturlage (19) befinden.

3. Filterelement nach Anspruch 1 oder 2, **dadurch gekennzeichnet, dass** Zusatzstrukturlagen (17, 19, 23) ohne Filtrationseigenschaften vorgesehen sind.

4. Filterelement nach einem der vorstehenden Ansprüche, **dadurch gekennzeichnet, dass** Zusatzstrukturlagen (17, 19, 23) mit Filtrationseigenschaften vorgesehen sind.

5. Filterelement nach einem der vorstehenden Ansprüche, **dadurch gekennzeichnet, dass** die Zusatzstrukturlagen (17, 19, 23) plissiert und vorzugsweise mit der gleichen Art und Anzahl von Falten (21) zusammen mit der Hauptstrukturlage (15) in die Filtermatte (3) eingefaltet sind.

6. Filterelement nach einem der vorstehenden Ansprüche, **dadurch gekennzeichnet, dass** Hauptstrukturlage (15) und/oder Zusatzstrukturlagen (17, 19, 23) mehrlagig aufgebaut sind.

7. Filterelement nach einem der vorstehenden Ansprüche, **dadurch gekennzeichnet, dass** Zusatzstrukturlagen (17, 19, 23) außenseitig oder als in der Filtermatte (3) innenliegende Lagen eingefaltet sind.

8. Filterelement nach einem der vorstehenden Ansprüche, **dadurch gekennzeichnet, dass** Zusatzstrukturlagen (17, 19, 23) anström- oder abströmseitig in die Filtermatte (3) eingefaltet sind.

9. Filterelement nach einem der vorstehenden Ansprüche, **dadurch gekennzeichnet, dass** die axiale Länge der Zusatzstrukturlagen (17, 19, 23) unterschiedlich ist.

10. Verfahren zum Herstellen eines Filterelements gemäß einem der Patentansprüche 1 bis 9, wobei eine, vorzugsweise aus mehreren Lagen bestehende, Filtermatte (3) aus einer, vorzugsweise mehrlagigen, Filtrationseigenschaften aufweisenden Hauptstrukturlage (15) zusammen mit zwei aus stabilisierendem Material bestehenden Zusatzstrukturlagen (17, 19, 23) gefaltet wird, wobei die Filtermatte (3) zu einem entlang einer Längsnaht (5) umfänglich geschlossenen Hohlkörper geformt wird, **dadurch gekennzeichnet, dass** die aus Hauptstrukturlage (15) und einer Zusatzstrukturlage (17, 19) bestehenden Enden (7, 8) des Hohlkörpers mit Endkappen (9, 11) durch Schweißen verbunden werden.

## Claims

1. Filter element, having a pleated filter mat (3), the axial closure ends (7, 8) of which are each connected to an end cap (9, 11) and which has a main structural layer (15) with filtration properties as well as a first and second additional structural layer (17, 19), the surface area of which is smaller in each case than the surface area of the main structural layer (15), wherein the axial ends (12, 14) of the one additional structural layer (17) are located on the filter mat (3) at an axial distance from the axial ends (16, 18) of the other additional structural layer (19) in each case, **characterised in that** at each of the two end caps (9, 11), one additional structural layer (17, 19) in each case is welded with one end (12, 18), together with the associated end (7, 8) of the main structural layer (15), into the respective end cap (9, 11), that the end caps (9, 11) consist of a plastic material which is suitable for a welding process in which components of the joining partners fuse by heating the end cap (9, 11), and that the additional structural layers (17, 19) consist of a material in the form of a prepreg material which cures during the folding process or is subsequently cured by heat input.

2. Filter element according to claim 1, **characterised in that** the filter mat (3) has a third stabilising additional structural layer (23), the ends (25, 27) of which are located at an axial distance from both the first (17) and the second structural layer (19) that are connected to an end cap (9, 11).

3. Filter element according to claim 1 or 2, **characterised in that** additional structural layers (17, 19, 23) without filtration properties are provided.

4. Filter element according to one of the preceding claims, **characterised in that** additional structural layers (17, 19, 23) with filtration properties are provided.

5. Filter element according to one of the preceding claims, **characterised in that** the additional structural layers (17, 19, 23) are pleated and preferably folded into the filter mat (3), together with the main structural layer (15), with the same type and number of pleats (21).

6. Filter element according to one of the preceding claims, **characterised in that** the main structural layer (15) and/or the additional structural layers (17, 19, 23) have a multi-layer structure.

7. Filter element according to one of the preceding claims, **characterised in that** the additional structural layers (17, 19, 23) are folded in on the outside or as layers on the inside of the filter mat (3).

8. Filter element according to one of the preceding claims, **characterised in that** additional structural layers (17, 19, 23) are folded into the filter mat (3) on the inflow or outflow side.

9. Filter element according to one of the preceding claims, **characterised in that** the axial length of the additional structural layers (17, 19, 23) varies.

10. Method for producing a filter element according to one of claims 1 to 9, wherein a filter mat (3), preferably consisting of a plurality of layers, is folded from a preferably multi-layer main structural layer (15) having filtration properties, together with two additional structural layers (17, 19, 23) consisting of stabilising material, wherein the filter mat (3) is formed into a hollow body which is closed circumferentially along a longitudinal seam (5), **characterised in that** the ends (7, 8) of the hollow body, which consist of the main structural layer (15) and an additional structural layer (17, 19), are connected to end caps (9, 11) by welding.

## Revendications

1. Elément de filtre, ayant une nappe (3) de filtre plissée, dont les extrémités (7, 8) de bout axiales sont reliées respectivement à une coiffe (9, 11) d'extrémité et qui a une couche (15) de structure principale ayant des propriétés de filtration, ainsi qu'une première et une deuxième couches de filtration (17, 19) de structure supplémentaires, dont l'étendue en surface est respectivement plus petite que l'étendue en surface de la couche (15) de structure principale, les extrémités (12, 14) axiales de la une couche (17) de structure supplémentaire se trouvant sur la nappe (3) de filtre à une distance axiale des extrémités (16, 18) axiales de l'autre couche (19) de structure supplémentaire, **caractérisée en ce que,** à chacune des deux coiffes (9, 11) d'extrémité, est incorporée par soudure dans la coiffe (9, 11) d'extrémité concernée, respectivement une couche (17, 19) de structure supplémentaire par une extrémité (12, 18), ensemble avec l'extrémité (7, 8) associée de la couche (15) de structure principale, **en ce que** les coiffes (9, 11) d'extrémité sont en une matière plastique qui est appropriée à une opération de soudure, dans laquelle, par échauffement des coiffes (9, 11) d'extrémité, des parties constitutives des partenaires de jonction se soudent et **en ce que** les couches (17, 19) de structure supplémentaires sont en un matériau constitué sous la forme d'un matériau de pré-imprégné, qui durcit lors du processus de pliage ou que l'on fait durcir ensuite par apport de chaleur.

2. Elément de filtre suivant la revendication 1, **caractérisé en ce que** la nappe (3) de filtre a une troisième couche (23) de structure supplémentaire stabilisante, dont les extrémités (25, 27) se trouvent à une distance axiale, tant de la première (17) , qu'également de la deuxième couche (19) de structure, reliée à une coiffe (9, 11) d'extrémité.

3. Elément de filtre suivant la revendication 1 ou 2, **caractérisé en ce qu'**il est prévu des couches (17, 19, 23) de structure supplémentaires sans propriétés de filtration.

4. Elément de filtre suivant l'une des revendications précédentes, **caractérisé en ce qu'**il est prévu des couches (17, 19, 23) de structure supplémentaires ayant des propriétés de filtration.

5. Elément de filtre suivant l'une des revendications précédentes, **caractérisé en ce que** les couches (17, 19, 23) de structure supplémentaires sont plissées et de préférence incorporées par pliage dans la nappe (3) de filtre ensemble avec la couche (15) de structure principale, en ayant le même type et le même nombre de plis (21).

6. Elément de filtre suivant l'une des revendications précédentes, **caractérisé en ce que** la couche (15) de structure principale et/ou les couches (17, 19, 23) de structure supplémentaires sont constituées en plusieurs couches.

7. Elément de filtre suivant l'une des revendications précédentes, **caractérisé en ce que** des couches (17, 19, 23) de structure supplémentaires sont incorporées par pliage du côté extérieur ou sous la forme de couches se trouvant à l'intérieur dans la nappe (3) de filtre.

8. Elément de filtre suivant l'une des revendications précédentes, **caractérisé en ce que** des couches (17, 19, 23) de structure supplémentaires sont incorporées par pliage dans la nappe (3) de filtre du côté de l'entrée ou du côté de la sortie.

9. Elément de filtre suivant l'une des revendications précédentes, **caractérisé en ce que** la longueur axiale des couches (17, 19, 23) de structure supplémentaires est différente.

10. Procédé de fabrication d'un élément de filtre suivant l'une des revendications 1 à 9, dans lequel on plie une nappe (3) de filtre, constituée de préférence de plusieurs couches, composée d'une couche (15) de structure principale, de préférence en plusieurs couches ayant des propriétés de filtration, ensemble avec deux couches (17, 19, 23) de structure supplémentaires en un matériau stabilisant, dans lequel on forme la nappe (3) de filtre en un corps creux fermé sur le pourtour le long d'une couture (5) longitudinale, **caractérisé en ce que** l'on relie par soudure à des coiffes (9, 11) d'extrémité les extrémités (7, 8), constituées de la couche (15) de structure principale et d'une couche (17, 19) supplémentaire, du corps creux.
